(19) Europäisches Patentamt
European Patent Office
Office européen des brevets

(11) **EP 0 647 774 B1**

(12) **FASCICULE DE BREVET EUROPEEN**

(45) Date de publication et mention
de la délivrance du brevet:
**08.07.1998 Bulletin 1998/28**

(51) Int Cl.⁶: **F02D 35/02**, F02D 41/26

(21) Numéro de dépôt: **94402248.2**

(22) Date de dépôt: **06.10.1994**

(54) **Système d'acquisition et de traitement instantané de données pour le contrôle d'un moteur à combustion interne**

System zur Erfassung und Sofortverarbeitung von Daten für eine Steurerung einer Brennkraftmaschine

System for the acquisition and instantaneous processing of data for the control of an internal combustion engine

(84) Etats contractants désignés:
**AT BE CH DE DK ES GB GR IT LI NL PT SE**

(30) Priorité: **12.10.1993 FR 9312251**

(43) Date de publication de la demande:
**12.04.1995 Bulletin 1995/15**

(73) Titulaire: **INSTITUT FRANCAIS DU PETROLE**
**92506 Rueil-Malmaison (FR)**

(72) Inventeurs:
• **Masson, Olivier**
**F-92500 Rueil-Malmaison (FR)**

• **Pinchon, Philippe**
**F-92500 Rueil-Malmaison (FR)**
• **Rivaud, Michel**
**F-92800 Puteaux (FR)**

(56) Documents cités:
DE-A- 4 020 681    DE-A- 4 113 582
DE-A- 4 241 683    US-A- 4 111 041

• **PATENT ABSTRACTS OF JAPAN vol. 15, no. 8 (M-1067) 9 Janvier 1991 & JP-A-02 259 251 (FUJI HEAVY IND LTD) 22 Octobre 1990**
• **PATENT ABSTRACTS OF JAPAN vol. 8, no. 154 (M-310) 18 Juillet 1984 & JP-A-59 051 135 (TOYOTA JIDOSHA KK) 24 Mars 1984**

**Description**

La présente invention concerne un système de commande permettant d'optimiser instantanément (en temps réel) le point de fonctionnement d'un moteur à combustion interne à quatre temps par un traitement en temps réel de paramètres significatifs de son fonctionnement tels que la pression régnant dans les différentes chambres de combustion à une série d'instants successifs de chaque cycle de combustion, la vitesse de rotation du moteur etc, et de commander des réglages optimaux d'injection de carburant, d'allumage, de distribution etc.

L'invention peut trouver des applications dans les laboratoires d'étude des motoristes pour aider à la conception des systèmes de commande de moteurs d'automobiles. Il peut être intégré également dans les systèmes de commande de moteurs performants au sein d'un véhicule.

Il est connu d'associer à un moteur un ou plusieurs capteurs pour mesurer plusieurs paramètres de façon à mieux contrôler son fonctionnement. Il peut s'agir d'accéléromètres permettant de détecter l'apparition de cliquetis, de capteurs de pression pour mesurer la pression à l'intérieur des chambres ou dans les conduits d'admission et d'échappement, de capteurs de température, de capteurs de levée d'aiguille d'injecteurs etc.

Il est connu également d'appliquer au moyen d'un calculateur, des réglages prédéfinis à un moteur en rapportant les indications des capteurs à des configurations-types mémorisées. Pour que ce procédé soit efficace, il faut mettre en oeuvre de nombreux capteurs et "cartographier" des tables complexes de configurations-types rapportées à des conditions de fonctionnement très variées.

Un perfectionnement peut être apporté si l'on arrive à définir en temps réel les valeurs de certains paramètres complexes bien représentatifs des conditions instantanées de fonctionnement d'un moteur.

C'est le cas notamment de la pression moyenne indiquée P.M.I. qui donne une indication directe du travail utile des gaz au cours d'un cycle de combustion et permet des comparaisons entre des moteurs différents.

C'est aussi le cas d'un autre paramètre ST qui définit la stabilité dans le temps de cette pression P.M.I et fournit des informations sur la régularité de la combustion.

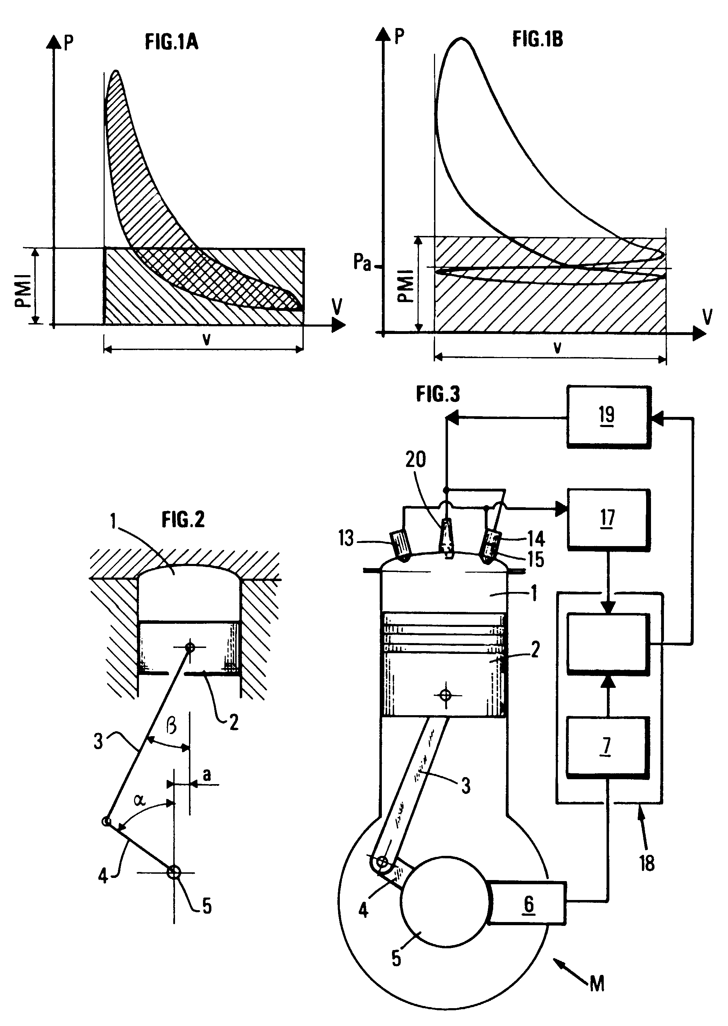

On sait que dans un moteur à combustion interne à deux ou quatre temps le travail utile des gaz (ou travail indiqué) pour un cycle peut être obtenu en mesurant (par exemple par planimétrage), l'aire d'un diagramme P/V (Fig.1A, 1B) enregistré pour le moteur, ou bien encore en calculant sur un cycle moteur la relation :

$$W = \int p \, dV = \int F \, dl = \int p \, S \, dl \tag{1}$$

où F est la force exercée par les gaz sur chaque piston, p la pression régnant dans la chambre de combustion, dV la variation du volume de la chambre, dl le déplacement correspondant du piston et S la surface projetée de celui-ci.

On définit la pression moyenne indiquée (PMI) comme étant la pression constante qui, appliquée sur le piston durant toute sa course de détente, fournirait le même travail indiqué Wi par cycle :

$$Wi = PMI \cdot S \cdot L$$

Cette pression P.M.I est obtenue comme le savent les spécialistes, par la relation :

$$PMI = \frac{1}{V_T} \cdot \oint_V P(V) \cdot dV \tag{2}$$

où P(V) est la pression mesurée en fonction du volume V, Vt est le volume balayé par le piston entre son passage au point mort bas PMB et son passage au point mort haut PMH.

Sur la Fig. 2, les paramètres suivants désignent respectivement : $\alpha$, l'angle fait par la manivelle 4 avec l'axe du cylindre 1, B et $\beta$ respectivement la longueur de la bielle 3 et l'angle qu'elle fait par rapport à l'axe du cylindre, a, le désaxage du piston 2 par rapport à l'axe du vilebrequin 5, m/2 la longueur de la manivelle 4, et V($\alpha$), la variation du volume de la chambre de combustion quand la manivelle balaie l'angle $\alpha$ jusqu'au point mort haut.

En exprimant la variation de volume en fonction de $\alpha$, la relation (2) s'exprime encore :

$$PMI = \frac{1}{V_T} \cdot \oint_V P(\alpha) \cdot \left( \frac{dV(\alpha)}{d\alpha} \right) \cdot d\alpha \tag{3}$$

Un calcul simple montre que compte-tenu des désignations précédentes, l'expression précédente peut être mise sous la forme suivante :

$$PMI = \frac{\pi}{360} \cdot \oint_{\alpha} P(\alpha) \cdot \left( \sin \alpha + \cos \alpha \cdot \frac{\eta}{\sqrt{1-\eta^2}} \right) \cdot d\alpha \qquad (4)$$

où

$$h = \sin \beta = a/B + m \sin \alpha/2B$$

Le facteur de stabilité ST de la P.M.I est obtenu à partir d'une collection de n valeurs de P.M.I successivement obtenues et mémorisées (n=100 ou 1000 par exemple), et on l'établit en appliquant la relation suivante :
     ST= écart-type de P.M.I / valeur moyenne de P.M.I,
     facteur établi à partir de la collection de valeurs obtenue.

Par le document DE-A-4241683, on connaît un système de commande d'un moteur à combustion interne capable d'optimiser les séquences de commande de l'injection de l'allumage etc, qui comporte notamment des moyens de repérage de la position du vilbrequin comprenant en combinaison un codeur angulaire donnant des tops avec une résolution de 1°V et un ensemble de détection des pics de pression dans au moins un cylindre pour générer les "tops tour".

Par le document DE-A-4020681, on connaît un système de commande d'un moteur à combustion interne capable, à partir de mesures discrètes de pression effectuées dans chaque cylindre et des indications fournies par des moyens de codage angulaire donnant les "tops-tour" et les "tops-angles", de calculer les valeurs de la PMI et du Wi. L'acquisition, la numérisation des valeurs de pression et les valeurs de PMI sont effectuées successivement dans les quatre cylindres. Il en est de même du calcul de la PMI dans les différents cyclindres.

La connaissance des valeurs de la P.M.I. d'un moteur est utilisée par exemple pour déterminer l'avance à l'allumage optimale AA° permettant de respecter des critères prédéfinis.

Un premier critère peut être d'obtenir une consommation spécifique indiquée (C.S.I) minimale (ou un couple moteur maximal).

Un deuxième critère peut être de minimiser les fractions les plus polluantes des gaz brûlés tels que le Nox. L'avance AA° optimale que l'on choisit dépend ici directement de la valeur trouvée pour le facteur de stabilité ST.

Un troisième critère peut être par exemple d'assurer la stabilité maximale du couple moteur.

Pour effectuer ces calculs, il est possible d'utiliser un ordinateur programmé pour effectuer les calculs de P.M.I et du facteur ST à partir d'un ensemble de mesures discrètes de pression obtenues à des instants successifs d'un même cycle. Les calculs peuvent être menés en temps réel simultanément pour tous les cylindres, mais, pour cela:

- on doit choisir une fréquence relativement basse d'échantillonnage des pressions mesurées, ce qui conduit à des valeurs assez approximatives de cette pression P.M.I, et du facteur ST précédents, ou bien
- il faut acquérir successivement par multiplexage les échantillons de pression mesurés dans les différents cylindres, ce qui revient à diminuer le nombre de valeurs de P.M.I obtenues.

Dans les deux cas, les limitations imposées par les vitesses d'acquisition et de calcul insuffisantes, élargissent dans une marge considérable les incertitudes sur les valeurs effectives de P.M.I et sur leur facteur de stabilité ST, ce qui diminue les possibilités de contrôle efficace du fonctionnement des moteurs, et constitue un frein au développement des techniques de contrôle si l'on envisage notamment d'équiper des véhicules avec de tels systèmes.

Le système d'acquisition et de traitement de données selon l'invention permet, par détermination en temps réel de paramètres physiques, d'optimiser le fonctionnement d'un moteur à combustion interne à deux ou quatre temps comprenant au moins une chambre de combustion délimitée par un cylindre et un piston, des moyens capteurs pour mesurer au moins les variations de la pression dans ladite chambre et des moyens de codage angulaire produisant des impulsions indicatives des variations angulaires du vilebrequin (ou tops angle) ainsi que des impulsions de synchronisation de cycle (ou tops synchro) à chaque tour de celui-ci, incluant des moyens de mémorisation pour stocker des données concernant des paramètres spécifiques au moteur, et des moyens de repérage angulaire pour appliquer à l'ensemble de traitement, des données initiales concernant la position des impulsions de synchronisation (Sy) par rapport au point mort haut dudit piston le système étant caractérisé en ce qu'il comporte:

- des moyens (de mise en forme pour délivrer des incréments d'angle à intervalles angulaires fixes, quelle que soit la valeur des incréments d'angle délivrés par les moyens (6) de codage angulaire;

- un ensemble d'acquisition des signaux de mesure comportant des moyens pour l'acquisition simultanée des variations de la pression mesurée dans toutes les chambres de combustion et à chaque cycle;

- l'ensemble de traitement qui inclut un processeur numérique, étant adapté, en coopération avec les moyens de mise en forme, les moyens de repérage angulaire et l'ensemble d'acquisition, à repérer automatiquement la position angulaire réelle du vilebrequin à l'intérieur de chaque cycle, par référence aux mesures de pression dans ladite chambre, à mettre en phase les impulsions de synchronisation (Sy) en phase avec celles issues des moyens de mise en forme.

L'ensemble de traitement est adapté par exemple à déterminer en temps réel la pression moyenne indiquée (P. M.I) dans chacun des cylindres, à partir d'un ensemble de valeurs instantanées de pression acquises au cours de chaque cycle ainsi que le facteur de stabilité (ST) de cette pression moyenne indiquée dans chacun des cylindres à partir d'un ensemble de valeurs successives de celle-ci.

Suivant un mode de réalisation, l'ensemble d'acquisition comporte plusieurs entrées pour collecter des signaux issus de moyens capteurs de pression associés à plusieurs cylindres, et l'ensemble de traitement est adapté à déterminer en temps réel et en séquence la pression moyenne indiqué (P.M.I) dans tous les cylindres.

Suivant un autre mode de réalisation, l'ensemble d'acquisition comporte plusieurs entrées pour collecter simultanément des signaux issus de moyens capteurs tels que ceux que l'on associe généralement aux moteurs pour surveiller leur fonctionnement, et notamment des capteurs adaptés à mesurer un ou plusieurs des paramètres suivants: pressions dans chaque cylindre, pressions à l'admission et à l'échappement, levées d'aiguilles d'injecteurs, accélérations, températures, couple du moteur etc, ou détecter un cliquetis, et l'ensemble de traitement est adapté à déterminer en temps réel et simultanément la pression moyenne indiquée dans chacun des cylindres.

Le système selon l'invention comporte de préférence un organe de commande pour déterminer les paramètres optimaux de fonctionnement du moteur en fonction des paramètres complexes et piloter son fonctionnement

Suivant un mode de réalisation, les moyens de mise en forme comportent un élément diviseur pourvu de moyens de réglage du facteur de division et un élément de déphasage, ces deux éléments coopérant pour produire des incréments angulaires à une fréquence angulaire sous-multiple de celle des incréments angulaires issus des moyens de codage angulaire, et synchrones avec les impulsions de synchronisation (Sy).

Suivant un mode de réalisation, l'ensemble de traitement est adapté à décaler automatiquement la valeur de l'angle du vilebrequin en fonction de l'instant de détection de la pression maximale (PMAXHP) mesurée dans la chambre de combustion.

Les moyens de mémorisation comportent par exemple une unité de mémorisation des variations prédéterminées du volume de chaque chambre de combustion en fonction de l'angle de rotation ($\alpha$) du vilebrequin.

L'ensemble de traitement est adapté par exemple à déterminer en temps réel et pour chacun des cylindres un ou plusieurs des paramètres complexes suivants: PMI sur chaque cycle de combustion, PMIHP et PMIBP respectivement sur les parties à haute pression et basse pression de chaque cycle de combustion, mesurées respectivement au cours de chacune de ces mêmes parties de cycle pression maximale, et facteurs de stabilité ST respectifs de ces paramètres complexes., ceci éventuellement pour chacune des chambres de combustion du moteur.

Suivant un mode de réalisation, l'ensemble de traitement est adapté à positionner automatiquement les parties de cycle de haute pression par référence à la pression maximale mesuré dans chaque chambre de combustion, que le moteur soit de type à deux ou à quatre temps.

Du fait de sa structure, le système selon l'invention possède de grands avantages.

- Il est capable de fournir en temps réel à chaque fois que l'angle de rotation du vilebrequin a varié d'un incrément faible et fixe (1°V ou une fraction de °V par exemple), un ou plusieurs paramètres complexes tels que la pression moyenne indiquée PMI sur un cycle complet de combustion, et, dans le cas d'un moteur à 4 temps, séparément la PMI des parties haute pression (HP), et basse pression (BP) de chaque cycle, la pression maximale, le coefficient de stabilité ST des paramètres précédents sur un certain nombre de cycles successifs etc.

- Il est capable, à partir des valeurs calculées précédemment de piloter un élément de contrôle (un calculateur d'injection par exemple) ce qui permet facilement d'optimiser à chaque instant le fonctionnement du moteur.

- La modification de la fréquence des impulsions délivrées par le codeur d'angle utilisé, permise par les moyens de mise en forme et de repérage angulaire dont il est pourvu, est particulièrement appréciable dans les laboratoires d'étude notamment lorsque l'on cherche à estimer la fréquence d'échantillonnage suffisante à l'évaluation de la PMI dans le cadre de la conception d'un calculateur d'injection équipé de ce système.

Les moyens de mise en forme et de repérage angulaire utilisés, permettent aussi de synchroniser automatiquement et à tout instant, les impulsions délivrées par le codeur d'angle utilisé, par référence au cycle de fonctionnement du moteur (cycle haute pression ou basse pression). . Le système peut donc s'adapter à n'importe quel moyen de codage utilisé et aussi éliminer automatiquement toute ambiguïté et toute erreur sur la valeur de l'angle de rotation du vilebrequin dès que le moteur est mis en route.

Cet avantage est d'autant plus net que l'on peut vérifier dans la pratique combien la valeur de paramètres complexes tels que la PMI par exemple, sur lesquels on se base pour optimiser le fonctionnement d'un moteur, est susceptible de varier du fait d'erreurs de repérage angulaire. Une erreur de 1/10e de degré de l'angle de rotation du vilebrequin (°V) par rapport à sa position réelle par exemple pouvant se traduire par une variation considérable de la PMI d'un moteur (jusqu'à 10% et plus dans certains cas), l'utilisation du système selon l'invention garantit une meilleure fiabilité des résultats.

L'invention concerne aussi un procédé pour optimiser le fonctionnement d'un moteur à combustion interne à deux ou quatre temps comme défini précédemment.

Il est caractérisé en ce qu'il comporte :

- une mise en forme des impulsions (ai) pour délivrer des incréments d'angle à intervalles angulaires déterminés quelle que soit la valeur de ceux délivrés par les moyens de codage angulaire;
- un repérage de la position des impulsions de synchronisation (Sy) par rapport au point mort haut (PMH) dudit piston;
- un recalage automatique des impulsions angulaires engendrées par lesdits moyens de codage angulaire pour les mettre en concordance avec la partie effective du cycle de combustion où ils sont émis;
- la détermination en temps réel au cours de chaque cycle et pour chacune des chambres, de plusieurs paramètres complexes incluant au moins des valeurs de la pression moyenne indiquée (PMI) et celles de facteurs de stabilité (S) de ces dites valeurs de pression PMI;
- l'établissement de cartographies incluant lesdits paramètres complexes; et
- la commande du moteur pour obtenir d'une part une consommation spécifique indiquée ou un couple moteur maximal, et d'autre part un taux minimal de rejets nocifs dans les gaz d'échappement du moteur.

D'autres caractéristiques et avantages du système de contrôle selon l'invention, apparaîtront à la lecture de la description ci-après de modes de réalisation décrits à titre d'exemples, en se référant aux dessins annexés où :

- les Fig.1A et 1B montrent schématiquement un diagramme de variation de la pression régnant dans un cylindre en fonction du volume de la chambre de combustion dans le cas d'un moteur à deux temps et dans le cas d'un moteur à quatre temps;
- la Fig.2 est un schéma simplifié pour illustrer le mode de calcul de la PMI;
- la Fig.3 est un schéma de principe montrant un moteur associé au système d'optimisation selon l'invention;
- la Fig.4 montre schématiquement la structure du système de contrôle selon l'invention;
- la Fig.5 montre schématiquement l'agencement de l'ensemble de synchronisation automatique associé au codeur d'angle;
- les Fig.6A à 6D montrent des chronogrammes de signaux issus de l'ensemble de synchronisation précédent;
- les Fig.7A et 7B montrent un exemple de variation au cours d'un cycle, de la pression régnant dans un cylindre en fonction de la position angulaire du vilebrequin, dans le cas d'un moteur à 2 temps; et
- les Fig.8A et 8B montrent un exemple analogue dans le cas d'un moteur à 4 temps.

Le système de contrôle qui va être décrit, permet de calculer en temps réel de nombreux paramètres physiques nécessaires pour optimiser le fonctionnement d'un moteur, en fonction notamment de la variation angulaire du vilebrequin repérée par un organe de codage.

Comme on utilise de préférence un codeur angulaire de type incrémental, on exploite la relation précédente (4) en la mettant sous la forme :

$$PMI = \frac{\pi}{360} \cdot \sum_{i=0}^{i=\frac{180 \times type}{résolution}-1} P(i) \cdot \left( \sin\alpha + \cos\alpha \cdot \frac{\eta}{\sqrt{1-\eta^2}} \right) \qquad (5)$$

où type est un nombre valant 2 pour un moteur à 2 temps et 4 pour un moteur à 4 temps.

Pour minimiser le temps de calcul, on exprime la PMI comme une somme de produits de valeurs dans deux tables de valeurs, l'une comportant n valeurs de pression P(i) mesurées au cours de chaque cycle aux instants ti d'incrémentation angulaire, l'autre étant constituée d'une liste prédéfinie des valeurs que prend le facteur T(i) proportionnel à la dérivée du volume V par rapport à l'angle de vilebrequin soit :

Pour un moteur 2 temps :

$$PMI = \sum_{i=0}^{i=\frac{360}{résolution}} P(i) \cdot T(i) \quad (6)$$

Pour un moteur 4 temps :

$$PMI = \sum_{i=0}^{i=\frac{360}{résolution}} P(i) \cdot T(i) + \sum_{i=\frac{360}{résolution}}^{i=\frac{720}{résolution}-1} P(i) \cdot T\left(i - \frac{360}{résolution}\right)$$

$$(7)$$

Les différentes valeurs de T(i) sont calculées au préalable en fonction de la géométrie du moteur et la table qui en résulte est mémorisée dans la mémoire. Le calcul de la PMI est donc effectué en sommant des produits entre des termes correspondants d'une table figée T(i) et une table continuellement rafraîchie P(i) en fonction des variations de la pression mesurée dans les cylindres.

Le système selon l'invention (Fig.3-5) sert à piloter un moteur M qui est pourvu d'un moyen de codage angulaire 6 associé à un ensemble d'interface 7 pour adapter les signaux de codage angulaire.

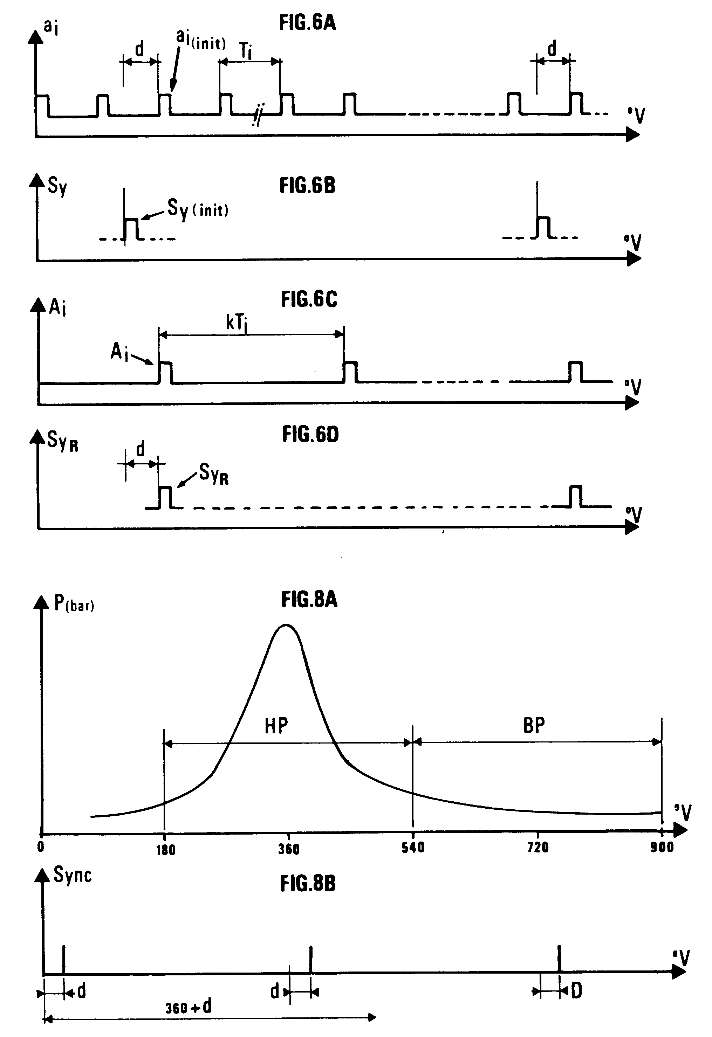

Les moyens de codage angulaire généralement utilisés peuvent être des roues dentées ou "cibles" incluses dans le moteur (sur le volant moteur par exemple) ou bien des codeurs angulaires entraînés par lui. Les moyens de codage produisent continuellement sur une première sortie s1, des trains d'impulsions ai, chacune d'elles correspondant à une incrémentation prédéfinie de l'angle $\alpha$ de la manivelle 4 (Fig.6A). Cet incrément angulaire peut, selon le codeur angulaire utilisé varier entre plusieurs degrés vilbrequin (°V) (cible utilisée sur les automobiles) et une fraction de °V (codeurs angulaires rapportés couramment utilisés dans les installations de laboratoires d'étude par exemple).

Sur une deuxième sortie, les moyens de codage produisent une fois par tour de vilebrequin, des impulsions de synchronisation Sy correspondant par exemple à une dent manquante sur une roue dentée. Elles ne sont pas obligatoirement en phase avec les impulsions ai mais leur déphasage d par rapport à celles-ci est fixé par construction. Par des mesures préalables on sait également quel est leur décalage d par rapport au point mort haut (PMH).

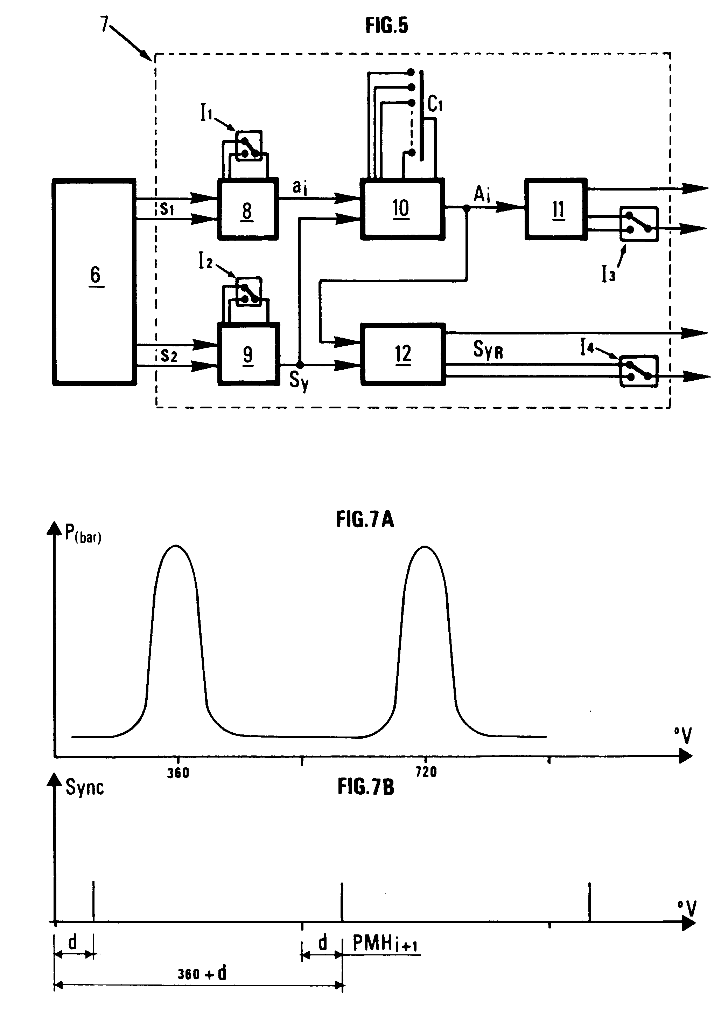

L'ensemble d'interface 7 comporte (Fig. 5) deux éléments-tampons 8, 9 recevant respectivement les signaux s1 et s2 délivrés par le codeur angulaire 6, pour isoler électriquement de lui le système selon l'invention, chacun d'eux étant pourvu d'un inverseur I1, I2 permettant de sélectionner soit un front montant d'impulsion, soit un front descendant. Les signaux issus des deux éléments-tampons 8, 9 sont appliqués à un diviseur de fréquence 10 permettant au moyen d'un commutateur C1, de changer la période angulaire Ti des impulsions angulaires ai produites par le codeur 6.

Ce changement peut servir par exemple à ramener cette période angulaire à une période de travail kTi convenant pour les convertisseurs analogiques-numériques 22 (tous les °V par exemple). Pour la mise au point d'un calculateur d'injection menée dans un laboratoire d'étude par exemple, où l'on dispose d'un codeur angulaire 6 délivrant des impulsions avec une période très courte (1/10e de °V par exemple), on peut agir aussi sur le commutateur C.I pour sélectionner une période de travail kTi plus longue suffisante compte-tenu de la précision requise pour les calculs de P.M.I et de stabilité de P.M.I.

Le diviseur 10 sélectionne donc une impulsion Ai toutes les k impulsions ai à partir d'une impulsion initiale ai(init). Cette impulsion initiale (fig.6A) est choisie à la mise en route, comme étant celle qui suit immédiatement la détection de la première impulsion Sy(init) reçue du codeur 6 (Fig.6B). Le diviseur 10 produit donc des impulsions Ai (Fig.6C).

Les impulsions Ai issues du diviseur 10, sont mises en forme dans un basculeur monostable 11 d'une part et sont appliquées d'autre part à un déphaseur 12. Celui-ci est adapté à décaler les impulsions de synchronisation Sy issues de l'élément 9 pour supprimer le décalage d (Fig.6D) et ainsi les mettre en phase (impulsions SyR) avec celles issues du diviseur 10. Deux inverseurs I3, I4 associés respectivement au monostable 11 et au déphaseur 12, permettent de choisir le front ascendant ou descendant des impulsions synchronisées produites.

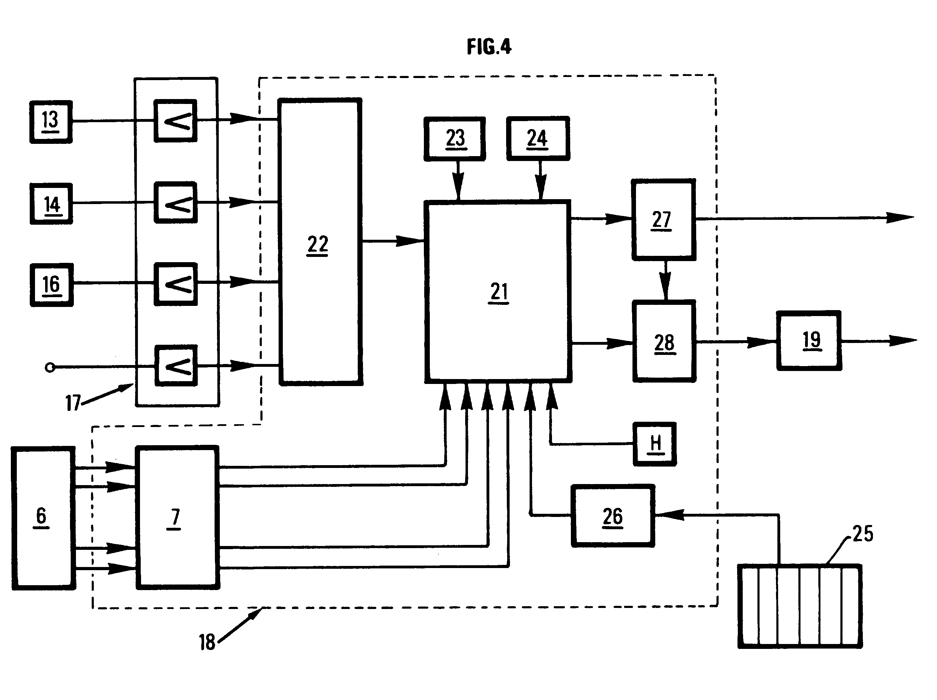

Le moteur M est aussi pourvu de capteurs de pression 13 mesurant la pression régnant à tout instant du cycle dans la chambre de combustion du cylindre ou de chacun d'eux (Fig.3). Dans le cas où le moteur est équipé d'un système d'alimentation de carburant pourvu d'un ou plusieurs injecteurs de carburant 15 à aiguille de dosage, il est possible aussi d'inclure un capteur 14 mesurant la hauteur de levée de chaque aiguille. Le moteur peut encore être équipé éventuellement d'accéléromètres 16 (Fig.4) ou de tout autre capteur (non représenté) tel qu'un détecteur de cliquetis par exemple.

Les signaux délivrés par les capteurs de pression, d'accélération et éventuellement de levée d'aiguille ainsi que de cliquetis, sont appliqués à des moyens d'amplification 17 pour adapter les niveaux d'amplitude des signaux mesurés.

Les signaux délivrés par les moyens d'amplification 17 et l'ensemble d'interface 7 sont transmis à un ensemble de traitement 18 calculant en temps réel divers paramètres physiques indicatifs du fonctionnement du moteur, notamment différentes valeurs de la PMI et leurs facteurs de stabilité respectifs ST, la pression maximale mesurée au cours de chaque cycle Pmax, la variation P(V), l'arc de levée d'aiguille de l'injecteur etc, comme on le précisera par la suite.

Les données produites sont alors transmises à des moyens de mémorisation d'un calculateur d'injection 19, pour constituer des cartographies pluri-dimensionnelles séparément pour chaque cylindre ou communes pour plusieurs d'entre eux, servant notamment à produire les signaux de pilotage des injecteurs 15 et des bougies d'allumage 20 du moteur.

L'ensemble de traitement 18 comporte (Fig.4) une unité centrale 21 du type processeur de signal ou DSP pilotée par une horloge H. Les signaux issus des moyens d'amplification 17, sont appliqués à l'unité centrale 21 par l'intermédiaire d'une unité de conversion analogique-numérique 22 comportant plusieurs convertisseurs à gain commutable entre 1 et $10^4$.

A l'unité centrale 21 sont associés deux modules de mémoire 23, 24 où sont disponibles respectivement les programmes de calcul des différents paramètres physiques recherchés tels que PMI, Pmax etc, et une ou plusieurs tables préétablies T(i) donnant la valeur du volume de la chambre de combustion pour chaque nouvel incrément angulaire Ai de l'angle $\alpha$, et qui servent pour le calcul de la PMI par la relation 6.

Au moyen de roues codeuses 25 et par l'intermédiaire d'un élément d'adaptation 26, on introduit dans le processeur 21, la valeur du décalage de temps D (déterminé au préalable) séparant (Fig.7,8) le point mort haut PMH de l'impulsion Ai.R à chaque révolution (Fig. 5) issue de l'élément d'interface 7. Cette valeur est par exemple le nombre d'impulsions angulaires Ai produites entre ces deux instants.

Dans le cas d'un moteur à deux temps où un tour de vilebrequin correspond à un cycle moteur (Fig.7A, 7B), on sait sans ambiguïté positionner à l'intérieur de ce cycle chaque impulsion Sy (top de synchro) délivrée par le codeur 6.

Par contre, si le moteur est à 4 temps (Fig. 8A, 8B), on ne peut savoir a priori à la mise en route du moteur, sans autre information, si la première impulsion Sy qui survient, délivrée par le codeur, doit être associée à la partie basse pression du cycle ou au contraire à sa partie haute pression.

Ce positionnement de ces "tops" Sy à l'intérieur de chaque cycle étant indispensable pour le calcul précis des paramètres de fonctionnement du moteur, le système selon l'invention est conçu pour lever automatiquement cette indétermination en détectant dans le cas d'un moteur à 4 temps, la position des impulsions de codage angulaire Ai délivrées par l'ensemble d'interface 7 par rapport à l'instant où la pression dans la chambre de combustion atteint son maximum, instant situé néccessairement durant une partie de cycle à haute pression.

Le principe utilisé est donc de mesurer la pression maximale dans la chambre de combustion durant les deux premières parties de cycle et soit de garder l'impulsion de synchronisation de la première partie si la pression maximale relevée est supérieure à celle relevée au cours du suivant, soit dans le cas contraire de retenir comme référence l'impulsion de synchronisation de la deuxième partie.

Les programmes inscrits dans le bloc de mémoire 23 sont établis en fonction des organigrammes qui vont suivre. La discrimination des cycles et la détermination des différents paramètres PMI, Pmax, Pmin, PMIHP, PMIBP pour un moteur à 4 temps, sont effectués par le processeur 21 suivant les organigrammes 1 à III. Le repérage angulaire et la détermination des paramètres Pmax et PMI pour un moteur à deux temps, sont effectués de même en accord avec les organigrammes IV à VI.

Les résultats produits par le processeur 21 sont d'une part appliquées à un ensemble 27 de convertisseurs numériques-analogiques pour leur utilisation notamment dans le calculateur d'injection 19 (Fig.3) et d'autre part à des mémoires-tampons 28.

## ORGANIGRAMME I

REPERAGE ANGULAIRE ABSOLU D'UN MOTEUR A 4 TEMPS

```
┌──────────────────────────────────────┐
│  Interruption I à chaque révolution   │
└──────────────────────────────────────┘
                    │
                    ▼
┌──────────────────────────────────────┐
│      Ignorer I une fois sur deux      │
└──────────────────────────────────────┘
                    │
                    ▼
```

$P_{MAXHP}$ cycle (i-1)  >  $P_{MAXBP}$ cycle (i-1) ?

Oui

Non

Position angulaire
absolue = calage PMH

Position angulaire absolue =
(calage PMH+360°)
module 720°

## ORGANIGRAMME II

DETERMINATION DE $P_{MAX}$ HP ET $P_{MAX}$ BP (MOTEUR A 4 TEMPS)

```
                    ┌─────────────────────────────┐
                    │   Interruption angulaire     │
                    └─────────────────────────────┘
                                  │
                                  ▼
            ┌───────────────────────────────────────────┐
            │ Position angulaire absolue (PAA) = PAA + 1 │
            └───────────────────────────────────────────┘
                                  │
         Oui                      ▼                    Non
      ┌─────────────────<  Cycle HP ?  >──────────────────┐
      │                                                    │
      ▼                                                    ▼
 Non                                                            Non
  ┌──<  P_PAA  >  P_MAXHP cycle (i) >        <  P_PAA  >  P_MAXBP cycle (i) >──┐
  │                    │                              │                       │
  │                  Oui ▼                          Oui ▼                     │
  │      ┌─────────────────────────┐      ┌─────────────────────────┐         │
  │      │ Mémoriser P_PAA          │      │ Mémoriser P_PAA          │         │
  │      │ comme P_MAX HP cycle (i) │      │ comme P_MAXBP cycle (i)  │         │
  │      └─────────────────────────┘      └─────────────────────────┘         │
  │                    │                              │                        │
  │  Oui               ▼          Non      Non        ▼             Oui        │
  └──<  Fin du cycle HP ?  >──────────┐  ┌───<  Fin du cycle BP ?  >───────────┘
      │                               │  │          │
      │                             Non│  │Non       │
      ▼                               │  │          ▼
┌────────────────────────────────┐    │  │    ┌────────────────────────────────┐
│ P_MAX HP [cycle(i-1)] =         │    │  │    │ P_MAX BP [cycle(i-1)] =         │
│           P_MAX HP (cycle i)    │    │  │    │           P_MAX BP (cycle i)    │
└────────────────────────────────┘    │  │    └────────────────────────────────┘
              │                        │  │                  │
              ▼                        │  │                  ▼
     ┌──────────────────────┐          │  │         ┌──────────────────────┐
     │ PMAXHP (cycle i) = 0  │          │  │         │ PMAXBP (cycle i) = 0  │
     └──────────────────────┘          │  │         └──────────────────────┘
              │                        ▼  ▼                  │
              ▼               ┌──────────────┐               ▼
     ┌────────────────────┐   │    Retour    │   ┌────────────────────┐
     │ Sortir             │──▶│              │◀──│ Sortir             │
     │ P_MAX HP [cycle(i-1)] │└──────────────┘   │ P_MAX BP [cycle(i-1)] │
     └────────────────────┘                      └────────────────────┘
```

## <u>ORGANIGRAMME III</u>

### DETERMINATION DES PARAMETRES PMI, $PMI_{HP}$, $PMI_{BP}$ D'UN MOTEUR A 4 TEMPS

```
Interruption angulaire I
```

Cycle HP ?

Oui → Non →

Accumuler le produit de la pression P(i) pour la position angulaire courante par le terme correspondant de la table figée T(i) à la valeur courante mémorisée de la PMI du cycle HP

Accumuler le produit de la pression P(i) pour la position angulaire courante par le terme correspondant de la table figée T(i) à la valeur courante mémorisée de la PMI du cycle BP

Fin du cycle HP ?   Non   Non   Fin du cycle BP ?

Oui →

Sortir la $PMI_{HP}$

$PMI = PMI_{HP} + PMI_{BP}$   Oui

Sortir la PMI et la $PMI_{BP}$

$PMI_{HP} = 0$

$PMI_{BP} = 0$

Retour

# ORGANIGRAMME IV

## REPERAGE ANGULAIRE ABSOLU D'UN MOTEUR A 2 TEMPS

```
┌─────────────────────────────┐
│ Interruption par révolution │
└─────────────────────────────┘
               │
               ▼
┌──────────────────────────────────────────────┐
│ Position angulaire absolue (PAA) = calage PMH │
└──────────────────────────────────────────────┘
               │
               ▼
       ┌───────────────┐
       │    Retour     │
       └───────────────┘
```

## ORGANIGRAMME V

DETERMINATION DE LA $P_{MAX}$ SUR UN MOTEUR A 2 TEMPS

```
┌─────────────────────────────┐
│   Interruption angulaire    │
└─────────────────────────────┘
                │
                ▼
┌────────────────────────────────────────────┐
│ Position angulaire absolue (PAA) = PAA + 1   │
└────────────────────────────────────────────┘
                │
                ▼
   Non      ╱─────────────────────╲
  ◄─────────┤   PAA < P_MAX  ?     │
            ╲─────────────────────╱
                │
                │ Oui
                ▼
        ┌───────────────────────┐
        │  Mémoriser la nouvelle │
        │        P_MAX           │
        └───────────────────────┘
                │
                ▼
   Non      ╱─────────────────────╲   Oui
  ◄─────────┤  Fin du cycle moteur ?├─────────►
            ╲─────────────────────╱
                                    │
                        ┌───────────────────┐
                        │   Sortir P_MAX     │◄───
                        └───────────────────┘
                                │
                        ┌───────────────────┐
                        │    P_MAX = 0       │
                        └───────────────────┘
                                │
                                ▼
                        ┌───────────────────┐
                        │     Retour         │
                        └───────────────────┘
```

EP 0 647 774 B1

## <u>ORGANIGRAMME VI</u>

DETERMINATION DE LA PMI SUR UN MOTEUR A 2 TEMPS

```
┌──────────────────────────────┐
│   Interruption angulaire     │
└──────────────────────────────┘
```

```
┌──────────────────────────────────────────────────────┐
│ Accumuler le produit de la pression Pi  à  la position │
│                                                        │
│ angulaire courante par le terme correspondant de la    │
│                                                        │
│ table figée T(i) à la valeur mémorisée de la PMI du    │
│ cycle courant.                                         │
└──────────────────────────────────────────────────────┘
```

non ⟨ Fin du cycle moteur ? ⟩ oui

```
┌──────────────────────┐
│    Sortir la valeur   │
│    de la PMI          │
└──────────────────────┘
```

```
┌──────────────────────┐
│       Retour          │
└──────────────────────┘
```

13

**EP 0 647 774 B1**

## Revendications

1. Système d'acquisition et de traitement de données permettant par détermination en temps réel de paramètres physiques, d'optimiser le fonctionnement d'un moteur à combustion interne à deux ou quatre temps comprenant au moins une chambre de combustion délimitée par au moins un cylindre et un piston, des moyens capteurs pour mesurer des signaux de fonctionnement du moteur, des moyens (6) de codage angulaire produisant des impulsions indicatives des variations angulaires du vilebrequin (ai) ainsi que des impulsions de synchronisation de cycle (Sy) à chaque tour de celui-ci, et un ensemble de traitement (18) incluant des moyens de mémorisation pour stocker des données concernant des paramètres spécifiques au moteur, et des moyens de repérage angulaire pour appliquer à l'ensemble de traitement des données initiales concernant la position des impulsions de synchronisation (Sy) par rapport au point mort haut (PMH) du dit piston, par référence à la pression maximale mesurée dans le cylindre, le système étant caractérisé en ce qu'il comporte :

   - des moyens (7) de mise en forme pour délivrer des incréments d'angle à intervalles angulaires fixes (Ai, Sy. R), quelle que soit la valeur des incréments d'angle délivrés par les moyens (6) de codage angulaire;

   - un ensemble (17, 22) d'acquisition des signaux de mesure comportant des moyens pour l'acquisition simultanée, avec une fréquence d'échantillonnage relativement élevée, des variations de la pression mesurée dans toutes les chambres de combustion et à chaque cycle;

   - ledit ensemble de traitement (18) incluant un processeur numérique (21), étant adapté, en coopération avec les moyens de mise en forme (7), les moyens de repérage angulaire (25, 26) et l'ensemble d'acquisition (17,22), à repérer automatiquement la position angulaire réelle du vilbrequin à l'intérieur de chaque cycle, par référence aux mesures de pression dans ladite chambre, et à mettre en phase les impulsions de synchronisation (Sy) avec celles issues des moyens (7) de mise en forme.

2. Système selon la revendication 1, caractérisé en ce que l'ensemble de traitement (18) est adapté à déterminer en temps réel la pression moyenne indiquée (P.M.I) dans chacun des cylindres, à partir d'un ensemble de valeurs instantanées de pression acquises au cours de chaque cycle ainsi que un facteur (ST) de stabilité de cette pression moyenne indiquée (P.M.I) dans chaque cylindre, à partir d'un ensemble de valeurs successives de celle-ci.

3. Système selon l'une des revendications précédentes, caractérisé en ce que l'ensemble d'acquisition (17,22) comporte plusieurs entrées pour collecter simultanément des signaux issus de capteurs de pression associés à plusieurs cylindres, et l'ensemble de traitement (18) est adapté à déterminer en temps réel et simultanément la pression moyenne indiquée (P.M.I) dans tous les cylindres.

4. Système selon l'une des revendications précédentes, caractérisé en ce que l'ensemble d'acquisition (17, 22) comporte plusieurs entrées pour collecter des signaux issus de moyens capteurs adaptés à mesurer un ou plusieurs des paramètres suivants: pressions dans chaque cylindre, pressions à l'admission et à l'échappement, levées d'aiguilles d'injecteurs, accélérations, températures, couple du moteur, ou détecter un cliquetis.

5. Système selon l'une des revendications précédentes, caractérisé en ce qu'il comporte en outre un organe de commande (19) pour déterminer les paramètres optimaux de fonctionnement du moteur en fonction desdits paramètres complexes.

6. Système selon l'une des revendications précédentes, caractérisé en ce que les moyens de mise en forme (7) comportent un élément diviseur (10) pourvu de moyens de réglage du facteur de division et un élément de déphasage (12), ces deux éléments coopérant pour produire des incréments angulaires à une fréquence angulaire sous-multiple de celle des incréments angulaires issus des moyens de codage angulaire (6), et synchrones avec lesdites impulsions de synchronisation (Sy).

7. Système selon l'une des revendications précédentes, caractérisé en ce que ledit ensemble de traitement (18) est adapté à décaler automatiquement la valeur de l'angle du vilebrequin en fonction de l'instant de détection de la pression maximale (PMAXHP) mesurée dans la chambre de combustion.

8. Système selon l'une des revendications précédentes, caractérisé en ce que les moyens de mémorisation comportent une unité (24) de mémorisation des variations prédéterminées du volume de chaque chambre de combustion en fonction de l'angle de rotation (a) du vilebrequin.

9. Système selon l'une des revendications précédentes, caractérisé en ce que l'ensemble de traitement est adapté à déterminer en temps réel et pour chacun des cylindres, au moins un des paramètres complexes suivants: pression moyenne indiquée (PMI) sur chaque cycle de combustion PMIHP et PMIBP respectivement sur les parties à haute pression et basse pression de chaque cycle de combustion, pressions maximales PMAXHP et PMAXBP mesurées respectivement au cours de chacune de ces mêmes parties de cycle, et les facteurs de stabilité S respectifs desdits paramètres complexes.

10. Système selon l'une des revendications précédentes, caractérisé en ce que l'ensemble de traitement (18) est adapté à positionner automatiquement les parties de cycle de haute pression par référence à la pression maximale mesurée dans chaque chambre de combustion, que le moteur soit de type à deux ou à quatre temps.

11. Procédé pour optimiser le fonctionnement d'un moteur à combustion interne avec des cycles de combustion à deux ou quatre temps comprenant au moins une chambre de combustion délimitée par un cylindre (1) et un piston (2), des moyens capteurs (13) pour mesurer au moins les variations de la pression dans chaque chambre de combustion et des moyens (6) de codage angulaire produisant des impulsions (ai) indicatives des variations angulaires du vilebrequin ainsi que des impulsions de synchronisation de cycle (Sy) à chaque tour de celui-ci, caractérisé en ce qu'il comporte :

- une mise en forme des impulsions (ai) pour délivrer des incréments d'angle à intervalles angulaires déterminés (Ai, Sy.R), quelle que soit la valeur de ceux délivrés par les moyens de codage angulaire;

- un repérage de la position des impulsions de synchronisation (Sy) par rapport au point mort haut (PMH) dudit piston;

- un recalage automatique des impulsions angulaires engendrées par lesdits moyens de codage angulaire pour les mettre en concordance avec la partie effective du cycle de combustion où ils sont émis;

- l'acquisition simultanée, avec une fréquence d'échantillonnage relativement élevée, des signaux de mesure de la pression régnant dans toutes les chambres de combustion à chaque cycle; et

- le traitement des signaux mesurés et des signaux de codage pour le repérage automatique de la position angulaire réelle du vilbrequin à l'intérieur de chaque cycle, par référence aux mesures de pression dans ladite chambre, et la mise en phase des impulsions de synchronisation (Sy) avec les impulsions (ai) remises en forme.

12. Procédé selon la revendication 11, caractérisé en ce que le traitement des signaux mesurés et des signaux de codage comprend :

a) détermination en temps réel au cours de chaque cycle et pour chaque chambres, de plusieurs paramètres complexes incluant au moins des valeurs de la pression moyenne indiquée (PMI) et celles de facteurs de stabilité (S) de ces dites valeurs de pression (PMI);

b) l'établissement de cartographies incluant lesdits paramètres complexes; et

c) commande du moteur pour obtenir d'une part une consommation spécifique indiquée ou un couple moteur maximal, et d'autre part un taux minimal de rejets nocifs dans les gaz d'échappement du moteur.

**Patentansprüche**

1. System zum Erfassen und Verarbeiten von Daten, welche durch Bestimmung in Realzeit von physikalischen Parametern es ermöglichen, die Funktionsweise einer Zweitakt- oder Viertaktbrennkraftmaschine zu optimieren, welche wenigstens eine durch wenigstens einen Zylinder und einen Kolben begrenzte Brennkammer umfaßt, Aufnehmermittel, um Funktionssignal des Motors zu messen, Winkelkodierungsmittel, welche Impulse erzeugen, die Winkelveränderungen der Kurbelwelle (ai) angeben sowie Synchronisationsimpulse für den Takt (Sy) bei jeder Umdrehung hiervon sowie eine Verarbeitungsanordnung, die Speichermittel umfaßt, um Daten abzulegen, welche dem Motor spezifische Parameter betreffen und Winkelmarkierungsmittel, um an die Verarbeitungsanordnung Ausgangsdaten zu legen, welche die Position der Synchronisationsimpulse (Sy) bzgl. des oberen Todpunktes (PMH) dieses Kolbens betreffen, unter Bezugnahme auf den maximalen im Zylinder gemessenen Druck, wobei das System sich dadurch auszeichnet, daß es umfaßt:

-   Mittel (7) zur Formgebung, um Winkelinkremente in festen Winkelintervallen (Ai, Sy.R) unabhängig vom Wert der Winkelelemente, die von den Winkelkodierungsmitteln (6) geliefert werden, zu liefern;
-   eine Verarbeitungsanordnung (17, 22) für Meßsignale, welche Mittel zur gleichzeitigen Erfassung, bei einer relativ erhöhten Tastfrequenz, der Veränderungen des Druckes umfassen, der in sämtlichen Verbrennungskammern und bei jedem Takt gemessen wurde;
-   wobei diese Verarbeitungsanordnung (18) einen digitalen Prozessor (21) einschließt, der so ausgelegt ist, daß er im Zusammenwirken mit den Formgebungsmitteln (7), den Winkelmarkierungsmitteln (25, 26) und der Erfassungsanordnung (17, 22) selbsttätig die reelle Winkelposition der Kurbelwelle im Inneren jedes Taktes, unter Bezugnahme auf die Druckmessungen in dieser Kammer markiert und die Synchronisationsimpulse (Sy) mit denen in Phase bringt, die aus den Formgebungsmitteln (7) stammen.

2.  System nach Anspruch 1, dadurch gekennzeichnet, daß die Verarbeitungsanordnung (18) so ausgelegt ist, daß er in Realzeit den mittleren in jedem der Zylinder angezeigten Druck (PMI) ausgehend von einer Gruppe momentaner Druckwerte, die während jedes Taktes erfaßt wurden sowie einem Stabilitätsfaktor (ST) dieses mittleren angezeigten Druckes (PMI) in jedem Zylinder ausgehend von einer Gruppe aufeinanderfolgender Werte hiervon, bestimmt.

3.  System nach einem der vorhergehenden Ansprüche, dadurch gekennzeichnet, daß die Erfassungsanordnung (17, 22) mehrere Eingänge umfaßt, um gleichzeitig Signale zu sammeln, die aus Druckaufnehmern stammen, die mehreren Zylindern zugeordnet sind, und daß die Verarbeitungsanordnung (18) so ausgelegt ist, daß sie in Realzeit und gleichzeitig den mittleren in sämtlichen Zylindern angezeigten Druck (PMI) bestimmt.

4.  System nach einem der vorhergehenden Ansprüche, dadurch gekennzeichnet, daß die Erfassungsanordnung (17, 22) mehrere Eingänge umfaßt, um Signale zu sammeln, die aus Aufnehmermitteln stammen, die so ausgelegt sind, daß sie einen oder mehrere der folgenden Parameter messen: Drücke in jedem Zylinder, Drücke am Einlaß und am Auslaß, Hub der Einspritznadeln, Beschleunigung, Temperaturen, das Motormoment oder ein Klopfen ermitteln.

5.  System nach einem der vorhergehenden Ansprüche, dadurch gekennzeichnet, daß es im übrigen ein Steuerorgan (19) umfaßt, um die optimalen Funktionsparameter des Motors als Funktion dieser komplexen Parameter zu bestimmen.

6.  System nach einem der vorhergehenden Ansprüche, dadurch gekennzeichnet, daß die Formgebungsmittel (7) ein Teilerelement (10) umfassen, das mit Regelmitteln für den Teilungsfaktor versehen ist und ein Element des Außerphasestellens (12), wobei diese beiden Elemente zusammenwirken, um Winkelinkremente bei einer Winkelfrequenz zu erzeugen, die ein Untervielfaches desjenigen der Winkelinkremente ist, die aus den Winkelkodierungsmitteln (6) stammen und synchron mit diesen Synchronisationsimpulsen (Sy) sind.

7.  System nach einem der vorhergehenden Ansprüche, dadurch gekennzeichnet, daß diese Verarbeitungsanordnung (18) so ausgelegt ist, daß sie automatisch den Wert des Winkels der Kurbelwelle als Funktion des Erfassungsaugenblickes des Maximaldrucks (PMAXHP), der in der Verbrennungskammer gemessen wurde, unter Versetzung verschiebt.

8.  System nach einem der vorhergehenden Ansprüche, dadurch gekennzeichnet, daß die Speichermittel eine Speichereinheit (24) der vorbestimmten Veränderungen des Volumens jeder Verbrennungskammer als Funktion des Drehwinkels (a) der Kurbelwelle umfassen.

9.  System nach einem der vorhergehenden Ansprüche, dadurch gekennzeichnet, daß die Verarbeitungsanordnung so ausgelegt ist, daß sie in Realzeit und für jeden der Zylinder wenigstens einen der folgenden komplexen Parameter bestimmt: mittlerer angezeigter Druck (PMI) über jeden Verbrennungstakt PMIHP und PMIBP jeweils an den Teilen mit hohem Druck und niedrigem Druck jedes Verbrennungstaktes, maximal Drücke PMAXHP und PMAXBP, die jeweils während jedes dieser Teile dieser Takte gemessen wurden und die jeweiligen Stabilitätsfaktoren S dieser komplexen Parameter.

10. System nach einem der vorhergehenden Ansprüche, dadurch gekennzeichnet, daß die Verarbeitungsanordnung (18) so ausgelegt ist, daß sie automatisch die Teile des Hochdrucktaktes bezogen auf den maximal gemessenen Druck in jeder Verbrennungskammer positioniert, sei es daß der Motor vom Zweitakttyp, sei es, daß es vom Viertakttyp ist.

11. Verfahren zum Optimieren der Funktionsweise einer Brennkraftmaschine mit Zweitakt- oder Viertaktverbrennungszyklen, wenigstens eine durch einen Zylinder (1) und einen Kolben (2) begrenzte Verbrennungskammer, Aufnehmermittel (13), um wenigstens die Druckveränderungen in dieser Verbrennungskammer zu messen sowie Winkelkodierungsmittel (6), welche Impulse (ai) erzeugen, welche die Winkelveränderungen der Kurbelwelle anzeigen sowie Synchronisationsimpulse (Sy) des Zyklus bei jeder Umdrehung hiervon umfassend, dadurch gekennzeichnet, daß es umfaßt:

- eine Formgebung der Impulse (ai), um Winkelinkremente bei bestimmten Winkelintervallen (Ai, Sy.R) unabhängig vom Wert an denjenigen zu liefern, die durch die Winkelkodierungsmittel geliefert wurden;
- eine Markierung der Position der Synchronisationsimpulse (Sy) bezogen auf den oberen Todpunkt (PMH) dieses Kolbens;
- eine automatische Wiederholung der durch diese Winkelkodierungsmittel erzeugten Winkelimpulse, um sie in Übereinstimmung mit dem Wirkteil des Verbrennungszyklus, wo sie ausgesandt werden, zu bringen.
- die gleichzeitige Erfassung der Meßsignale des in sämtlichen Verbrennungskammern bei jedem Zyklus herrschenden Drucks mit einer relativ erhöhten Tastfrequenz; und
- die Verarbeitung der gemessenen Signale und der Kodierungssignale für die automatische Markierung der reellen Winkelstellung der Kurbelwelle im Inneren jedes Zyklus, bezogen auf die Druckmessungen in dieser Kammer und das In-Phase-Bringen der Synchronisationsimpulse (Sy) mit den wieder in Form gebrachten Impulsen (ai).

12. Verfahren nach Anspruch 11, dadurch gekennzeichnet, daß die Verarbeitung der gemessenen Signale und der Kodierungssignale umfaßt:

a) Bestimmen in Realzeit während jedes Zyklus und für jede der Kammern von komplexen Parametern, einschließlich wenigstens der Werte des mittleren angegebenen Drucks (PMI) und denen von Stabilitätsfaktoren (S) dieser sogenannten Druckwerte (PMI);
b) Herstellung von Kartographien einschließlich dieser komplexen Parameter und
c) die Steuerung des Motors, um einen spezifischen angegebenen Verbrauch oder ein maximales Motormoment und andererseits einen minimalen Grad an schädlichem Ausstoß in den Austrittsgasen des Motors zu erhalten.

## Claims

1. A data acquisition and processing system which enables physical parameters to be determined in real time in order to optimise the performance of a two- or four-stroke internal combustion engine having at least one combustion chamber delimited by at least a cylinder and a piston, sensing means to measure engine performance signals, angle encoding means (6) generating pulses indicative of the angular variations in the crankshaft (ai) as well as cycle synchronisation pulses (Sy) with each revolution thereof, and a processing means (18) incorporating memory means for storing data relating to parameters specific to the engine, and angular locating means for applying initial data to the processing unit pertaining to the position of the synchronisation pulses (Sy) relative to top dead centre (TDC) of the piston by reference to the maximum pressure recorded in the cylinder, the system being characterised in that it has:

- shaping means (7) for issuing angle increments at set angular intervals (Ai, Sy.R) regardless of the value of the angle increments issued by the angle encoding means (6);

- a measurement signal acquisition unit (17, 22) having means for simultaneously acquiring, at a relatively high sampling frequency, the pressure variations measured in all the combustion chambers and with each cycle;

- said processing unit (18), which includes a digital processor (21) set up in conjunction with the shaping means (7), the angle detection means (25, 26) and the acquisition unit (17, 22) to detect automatically the actual angular position of the crankshaft within each cycle, by reference to the pressure measurements in said chamber and to phase the synchronisation pulses (Sy) with those issued by the shaping means (7).

2. A system as claimed in claim 1, characterised in that the processing unit (18) is set up to determine in real time the indicated mean effective pressure (IMEP) within each of the cylinders from a set of instantaneous pressure values acquired during each cycle as well as a stability factor (ST) for this indicated mean effective pressure (IMEP) in each cylinder from a set of successive values thereof.

3. A system as claimed in one of the preceding claims, characterised in that the acquisition unit (17, 22) has several inputs for simultaneously collecting the signals from pressure sensors associated with several cylinders and the processing unit (18) is set up to determine in real time and simultaneously the indicated mean effective pressure (IMEP) in all the cylinders.

4. A system as claimed in one of the preceding claims, characterised in that the acquisition unit (17, 22) has several inputs for collecting the signals from sensing means programmed to measure one or more of the following parameters: pressure in each cylinder, induction and exhaust pressure, injector needle-lift, accelerations, temperature, engine torque or to detect knock.

5. A system as claimed in one of the preceding claims, characterised in that it also has a control element (19) for determining optimum engine performance parameters as a function of said complex parameters.

6. A system as claimed in one of the preceding claims, characterised in that the shaping means (7) have a divider element (10) provided with means for regulating the division factor and a phase shifter element (12), these two elements co-operating to produce angular increments at an angular frequency which is a sub-multiple of that of the angular increments supplied by the angle encoding means (6) and synchronous with said synchronisation pulses (Sy).

7. A system as claimed in one of the preceding claims, characterised in that said processing unit (18) is set up to shift automatically the value of the crank angle as a function of the instant at which the maximum pressure (PMAXHP) measured in the combustion chamber is detected.

8. A system as claimed in one of the preceding claims, characterised in that the memory means have a unit (24) for storing predetermined variations in the volume of each combustion chamber as a function of the angle of rotation (a) of the crankshaft.

9. A system as claimed in one of the preceding claims, characterised in that the processing unit is set up to determine in real time and for each of the cylinders at least one of the following complex parameters: indicated mean effective pressure (IMEP) on each combustion cycle IMEPHP and IMEPLP respectively on the high-pressure and low-pressure parts of each combustion cycle, maximum pressures PMAXHP and PMAXLP measured respectively during each of these same cycle parts and the respective stability factors ST of said complex parameters.

10. A system as claimed in one of the preceding claims, characterised in that the processing unit (18) is set up to position the high-pressure parts of the cycle automatically by reference to the maximum pressure measured in each combustion chamber, regardless of whether the engine is of the two-stroke or four-stroke type.

11. A method of optimising the performance of an internal combustion engine with two- or four-stroke combustion cycles having at least one combustion chamber delimited by a cylinder (1) and a piston (2), sensing means (13) for recording at least the variations in pressure in each combustion chamber and angle encoding means (6) generating pulses (ai) indicative of the angular variations of the crankshaft as well as pulses for synchronising the cycle (Sy) with each revolution thereof, characterised in that it consists in:

- shaping the pulses (ai) to supply angle increments at given angular intervals (Ai, Sy.R) irrespective of the value of those issued by the angle encoding means;

- locating the position of the synchronisation pulses (Sy) relative to top dead-centre (TDC) of said piston;

- automatically adjusting the angular pulses generated by said angle encoding means to make them coincide with the effective part of the combustion cycle in which they were emitted;

- simultaneously acquiring, at a relatively high sampling frequency, the measurement signals of pressure prevailing in all the combustion chambers with each cycle; and

- processing the measured signals and the coding signals to locate automatically the real angular position of the crankshaft within each cycle by reference to the pressure measurements in said chamber and phasing the synchronisation pulses (Sy) with the shaped pulses (ai).

12. A method as claimed in claim 11, characterised in that processing the measured signals and the coding signals consists in:

a) determining in real time during each cycle and for each of the chambers a number of complex parameters including at least the indicated mean effective pressure values (IMEP) and those of the stability factors (S) of said pressure values IMEP;

b) setting up maps to incorporate said complex parameters; and

c) controlling the engine to produce an indicated specific consumption or a maximum engine torque on the one hand and a minimum rate of harmful discharge in the exhaust gases of the engine on the other.

FIG.1A

FIG.1B

FIG.2

FIG.3

FIG.4

EP 0 647 774 B1

**FIG.5**

**FIG.7A**

**FIG.7B**

## FIG.6A

## FIG.6B

## FIG.6C

## FIG.6D

## FIG.8A

## FIG.8B